# EUROPÄISCHE PATENTSCHRIFT

(11) **EP 4 553 338 B1**
(45) Veröffentlichungstag und Bekanntmachung des Hinweises auf die Patenterteilung: **16.09.2026**
(21) Anmeldenummer: 24208567.8
(22) Anmeldetag: 24.10.2024
(51) Int. Cl.: F16G 1/28

(54) **ZAHNRIEMENTRIEB**
TOOTHED BELT DRIVE
TRANSMISSION À COURROIE DENTÉE

(30) Priorität: 09.11.2023 DE 102023131110
(43) Veröffentlichungstag der Anmeldung: 14.05.2025
(73) Patentinhaber: Focke & Co. (GmbH & Co. KG), 27283 Verden (DE)
(72) Erfinder: Daszinnies, Ronny, 27283 Verden (DE); Roesler, Burkard, 27337 Blender (DE)
(74) Vertreter: Ellberg, Nils

(56) Entgegenhaltungen:
- WO-A1-2019/131407
- WO-A1-2022/210728
- US-A- 5 536 213
- US-A1- 2023 128 744

## Beschreibung

Die Erfindung betrifft einen Zahnriementrieb mit mindestens einer Zahnriemenscheibe und einem diese wenigstens teilweise umschlingenden Zahnriemen, mit wechselweise ineinander eingreifenden Zähnen und Zahnlücken, gemäß dem Oberbegriff des Anspruchs 1. Die Erfindung betrifft ferner einen entsprechenden Zahnriemen, gemäß dem Oberbegriff des Anspruchs 12.

Zahnriemen sind in vielen Industriebereichen in Zahnriementrieben verbreitet, darunter auch in der Verpackungstechnik. Sie übertragen präzise die Bewegung und die Kraft von einer Rolle (Antriebsrad) auf eine andere (getriebene Rolle) über die formschlüssige Verbindung der Zähne des Riemens mit den Zahnlücken einer Zahnriemenscheibe. Sowohl der Zahnriemen als auch die Zahnriemenscheibe können hierbei auf unterschiedlichste Weise geformt sein, um ein bestmögliches Zusammenspiel beider Komponenten zu gewährleisten.

Ein exemplarischer Einsatz eines Zahnriementriebs ist beispielsweise in der EP 3 650 361 A1 der Anmelderin gezeigt, bei der ein Zahnriemen als Teil eines Förderers 24 benutzt wird, um am Zahnriemen angeordnete Mitnehmer als Ausschieber 19 anzutreiben.

In der Verpackungstechnik kommen bevorzugt Zahnriemen mit T-, AT- oder AT-Move-Profil zum Einsatz, die trapezförmige Zähne aufweisen. Die Zahnriemen verfügen über eine Teilung, worunter der Abstand von Zahnmitte zu Zahnmitte von benachbarten Zähnen verstanden wird. Bei Zahnriemen mit T-Profil sind die Zähne etwa so groß wie die Zahnlücken der Zahnriemenscheibe, wohingegen bei einem AT-Profil die Zähne (deutlich) größer als die Zahnlücken sind. Die unterschiedlichen Profilgeometrien weisen unterschiedliche Vor- und Nachteile bezüglich des sogenannten Einzahnverhaltens (Vorgang vom Erstkontakt zwischen Zahn und Scheibe bis zum vollständigen Eingriffskontakt) und ihrer Steifigkeitseigenschaften (vom Zahnriemenzahn und Zugträger des Zahnriemens) auf.

Die aus dem Stand der Technik bekannten Zahnriemen weisen nur eine geringe Steifigkeit auf, sodass sich bei unterschiedlich starken auf den Zahnriemen einwirkenden Zugkräften schwankende Teilungen ergeben, d. h., je größer die Zugkraft ist, desto größer ist auch die Teilung. Durch die Benutzung der genannten Zahnriemenprofile kann vor allem beim AT-Profil durch eine hohe Zugkraft im Zahnriemen und der Einfederung des Zugträgers des Zahnriemens eine Differenz in den Wirkkreisdurchmessern dW von Zahnriemen und Zahnriemenscheibe auftreten. Der Wirkkreisdurchmesser dW beschreibt dabei die Kreisbogenlinie, die die Lage der Zugstränge im Zahnriemen bei Umschlingung der Zahnscheibe bildet. In Kombination mit der Teilungsdifferenz zwischen Zahnriemen und Zahnriemenscheibe resultiert hieraus eine Zahnverschiebung der Zähne des Zahnriemens auf der Zahnriemenscheibe. Diese führt zu erhöhten Zahnkräften an den einzelnen Zähnen des Zahnriemens. Diese können in Kombination mit der Relativbewegung zwischen Zahnriemen und Zahnriemenscheibe beim Einzahnvorgang zu einem entsprechend höheren Verschleiß durch vermehrten Abrieb am Zahnriemen führen.

Aus dem Stand der Technik ist durch das Dokument WO 2022/210728 A1 ein Zahnriementrieb bekannt, der zur Verbesserung der Rostbeständigkeit von Stahl-Zugträgern eine Deckschicht zwischen den Zugträgern und dem Zahngrund aufweist.

Hiervon ausgehend liegt der Erfindung die Aufgabe zu Grunde, einen verbesserten Zahnriementrieb zur Verfügung zu stellen, insbesondere das Einzahnverhalten zu verbessern und Kerbspannungen im Zahnriemen zu reduzieren.

Ein erfindungsgemäßer Zahnriementrieb weist die Merkmale des Anspruchs 1 auf. Es ist demnach vorgesehen, dass jeder Zahn des Zahnriemens im Übergang von den Flanken zum Kopf eine Abrundung aufweist, wobei ein Radius der Abrundung 9 % der Nennteilung des Zahnriemens beträgt +- 0,5 %.

Ferner kann der Zahnriemen eines oder mehrere der nachfolgenden Merkmale aufweisen:
Vorzugsweise kann vorgesehen sein, dass der Zahnriemen Zähne mit einem derart modifizierten Trapez-Profil aufweist, dass der Kontakt der Zähne des Zahnriemens mit der Zahnriemenscheibe auf einem Kopf eines Zahns der Zahnriemenscheibe stattfindet.

Diese Lösung kann den Vorteil aufweisen, dass die Lage des Zahnriemenwirkkreisdurchmessers nur in geringem Maße von der Zugkraft im Zahnriemen abhängig ist. Zudem können auf diese Weise standardgemäße Zahnriemenscheiben zum Einsatz kommen, wodurch Kosten gespart werden.

Ferner kann vorgesehen sein, dass ein Abstand (c) von Zugträgern des Zahnriemens zu einer Zahnriemenfußlinie des Zahnriemens im nicht komprimierten (Ausgangs-)Zustand des Zahnriemens etwa 4 % einer Nennteilung des Zahnriemens beträgt.

Diese Lösung kann den Vorteil aufweisen, dass eine hohe Steifigkeit des Zahnriemens in radialer Richtung gegeben ist. Zudem ergibt sich eine geringere Einfederung des Zahnriemens aufgrund des geringeren Materials zwischen Zugträger und Zahnriemenscheibenzahn.

Durch die im Betrieb vorliegende Vorspannung des Zahnriemens wird dieser in radialer Richtung komprimiert, wodurch sich der Abstand zwischen Zugträger und Zahnriemenfußlinie ändert. Aus diesem Grund wird hier zu Definitionszwecken auf den nicht komprimierten Ausgangszustand des Zahnriemens zurückgegriffen.

Als Nennteilung wird im Rahmen dieser Anmeldung jene Länge verstanden, die der Zugträger des Zahnriemens im gerade ausgerichteten Zustand und unter dem Wirken einer definierten Kraft (F) von der Mittellinie eines Zahns zur Mittellinie des benachbarten Zahns aufweist (bspw. 5 mm bei 100 N). Heißt, in diesem Fall beträgt der Abstand zwischen zwei benachbarten Zahnmittellinien unter der Krafteinwirkung von 100 N 5 mm.

Vorzugsweise kann in diesem Fall vorgesehen sein, dass der Abstand (c) 4 % der Nennteilung des Zahnriemens +- 0,1 mm beträgt.

Ferner kann vorgesehen sein, dass der Zahnriemen nur Zugträger aufweist, deren Durchmesser (dz) etwa 10 % der Nennteilung beträgt.

Diese Lösung kann den Vorteil aufweisen, dass die Zugträger eine hohe spezifische breiten- und höhenabängige Steifigkeit aufweisen, welche einen Wert von 3500 N/mm² übersteigen sollte, und die breiten- und teilungsabhängig ist.

Vorzugsweise kann in diesem Fall vorgesehen sein, dass der Durchmesser (dz) 4 % der Nennteilung des Zahnriemens +- 2 % beträgt.

Ferner kann vorgesehen sein, dass eine Spulsteigung, also der Abstand benachbarter Zugträger des Zahnriemens, geringer ist als das 1,85-Fache der Durchmesser der Zugträger.

Diese Lösung kann den Vorteil aufweisen, dass die Gesamtsteifigkeit des Zahnriemens durch die nahe beieinanderliegenden Zugträger erhöht ist.

Ferner kann vorgesehen sein, dass ein Flankenwinkel (f) zwischen Flanken benachbarter Zähne des Zahnriemens etwa 50° beträgt, insbesondere zwischen 45° und 55°, vorzugsweise 50°.

Diese Lösung kann den Vorteil aufweisen, dass das Einzahnverhalten des Zahnriemens verbessert ist.

Ferner kann vorgesehen sein, dass der Zahnriemen im Übergang von den Flanken der Zähne zur Zahnriemenfußlinie abgerundet ist.

Diese Lösung kann den Vorteil aufweisen, dass auftretende Kerbspannungen im Zahnriemen reduziert werden.

Alternativ kann vorgesehen sein, dass das Zahnprofil der Zähne des Zahnriemens eine Höhenballigkeit aufweist.

Auch diese Lösung kann zu einem verbesserten Einzahnverhalten führen, da weniger Material benötigt wird und somit die Kollisionsmöglichkeiten und auftretende Kerbspannungen reduziert werden.

Unter dem Begriff Höhenballigkeit wird im Rahmen dieser Anmeldung eine ballige Ausformung der Zahnflanke verstanden. Diese verläuft dann nicht geradlinig, sondern weist eine nach außen gewölbte Form auf.

Ferner kann vorgesehen sein, dass eine Breite (b) des Kopfes der Zähne des Zahnriemens zwischen zwei konvergierenden Zahnflanken eine Länge von X % der Nennteilung des Zahnriemens aufweist, wobei sich X in Abhängigkeit vom Profil des Zahnriemens wie folgt ergibt:
- X = 34 +- 3 bei Nennteilung 2,5
- X = 31 +- 3 bei Nennteilung 5
- X = 30 +- 3 bei Nennteilung 10
- X = 27 +- 3 bei Nennteilung 20

Weiterhin wird Schutz beansprucht für einen Zahnriemen gemäß Anspruch 12. Es ist demnach vorgesehen, dass jeder Zahn (20) des Zahnriemens (17) im Übergang von den Flanken (23) des Zahns (20) zum Kopf (25) des Zahns (20) eine Abrundung aufweist, wobei ein Radius der Abrundung 9 % der Nennteilung des Zahnriemens (17) beträgt +-0,5 %.

Ein Ausführungsbeispiel der Erfindung wird nachfolgend anhand der Zeichnung beschrieben. In dieser zeigt:
- Fig. 1: einen Teil einer Verpackungsmaschine mit einem Zahnriementrieb in schematischer räumlicher Darstellung,
- Fig. 2: einen Teil eines aus dem Stand der Technik bekannten Zahnriementriebs in einer Seitenansicht,
- Fig. 3: eine weitere Darstellung eines aus dem Stand der Technik bekannten Zahnriementriebs in einer weiteren Seitenansicht,
- Fig. 4: einen erfindungsgemäßen Zahnriementrieb in einer Darstellung entsprechend Fig. 3 und
- Fig. 5: einen Vertikalschnitt durch einen Zahnriemen des Zahnriementriebs entlang der Schnittebene V - V in Fig. 4.

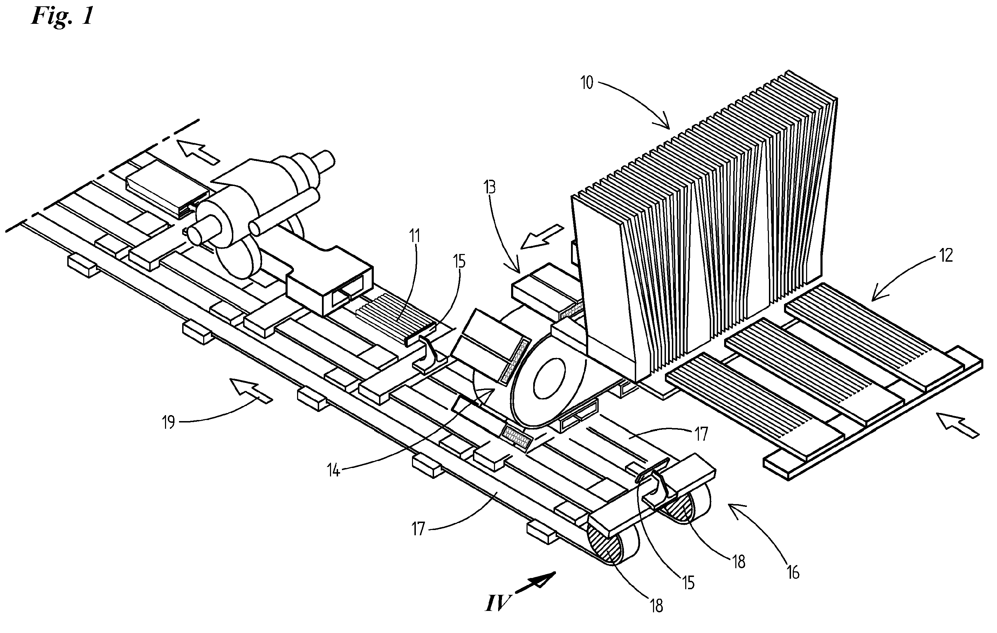

Ein möglicher Einsatzzweck eines erfindungsgemäßen Zahnriementriebs bzw. eines entsprechenden Zahnriemens ist in der eingangs zitierten EP 3 650 361 A1 der Anmelderin gezeigt und in Fig. 1 dieser Anmeldung dargestellt. Dort werden innerhalb einer Verpackungsmaschine für Produkte der Zigarettenindustrie aus einem Magazin 10 Produkte 11 mittels Stößeln 12 in Taschen 13 einer Taschenkette 14 ausgeschoben. Im Anschluss daran werden Gruppen von Produkten 11 aus den Taschen 13 mittels Mitnehmern 15 ausgeschoben und in einer Förderrichtung 19 entlang einer Produktbahn 16 transportiert. Die Mitnehmer 15 sind an Zahnriemen 17 angeordnet, welche über Zahnriemenscheiben 18 geführt sind und somit durch einen Zahnriementrieb angetrieben werden.

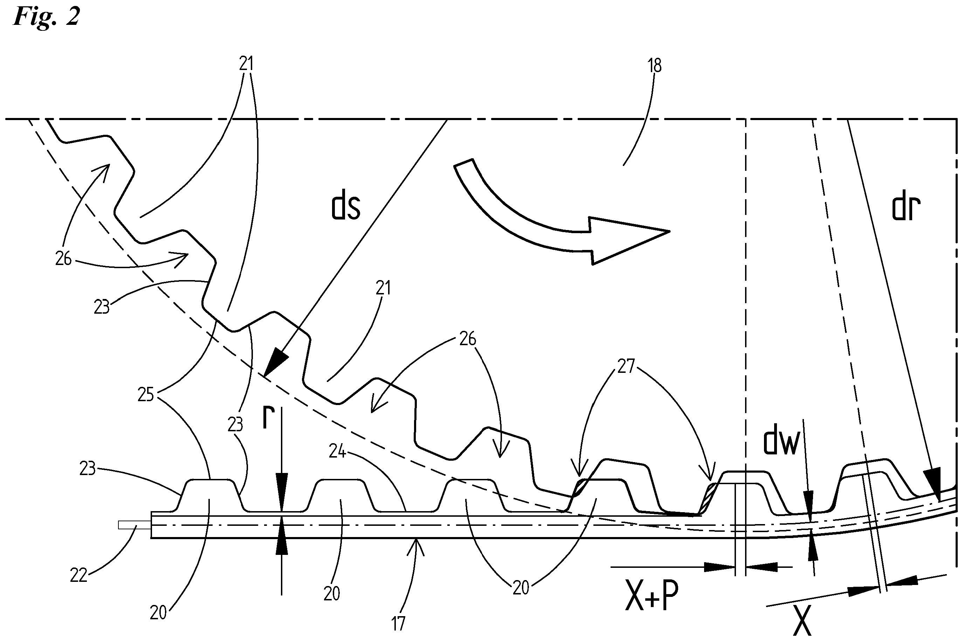

Ein entsprechender - aus dem Stand der Technik bekannter - Zahnriementrieb ist ausschnittsweise in Fig. 2 gezeigt, um die Begrifflichkeiten und Definitionen zu erläutern. Fig. 2 zeigt einen herkömmlichen und aus dem Stand der Technik bekannten Zahnriemen 17 mit einem T-Profil beim Einzahnvorgang, d. h. im Bereich des ersten Kontaktaufbaus zwischen Zahnriemenscheibe 18 und Zahnriemen 17. Hierzu wie folgt:
Der Zahnriemen 17 weist in gleichmäßigen Abständen an einer Seite Zähne 20 auf. Die Zähne 20 haben ein übereinstimmendes Profil, welches an das Profil der Zahnriemenscheibe 18 angepasst ist. Entsprechend der Zähne 20 des Zahnriemens 17 weist die Zahnriemenscheibe 18 korrespondierende Zähne 21 auf, zwischen die die Zähne 20 des Zahnriemens 17 in eine Lücke 26 eintreten. Der Zahnriemen 17 verfügt über Zugträger 22, die zur Aufnahme von im Betrieb wirkenden Zugkräften dienen. Jeder Zahn 20 verfügt über konvergierende Zahnflanken 23, die ausgehend vom einem Zahnfuß 24 (der Zahnriemenscheibe 18 zugewandte Seite des Zahnriemens 17 bzw. Innenseite des Zahnriemens 17 zwischen den Zähnen 20) zu einem Zahnkopf 25 (Oberseite) des Zahns 20 verlaufen. Auch die Zähne 21 der Zahnriemenscheibe 18 verfügen über entsprechende Zahnflanken 23. Fig. 2 zeigt auch die Lage der sog. Zahnriemenfußlinie 28.

In Fig. 2 ist zu erkennen, dass aufgrund der Zugkräfte im Zahnriemen 17 eine radiale Einfederung der Zugträger 22 erfolgt, welche als Differenz r zwischen einem einlaufenden Zahnriemenfuß 24 und der Zahnriemenfußposition am Punkt des ersten Aufeinandertreffens von Zahnriemen 17 und Zahnriemenscheibe 18 vorliegt. Hieraus resultiert, dass die beiden Wirkkreisdurchmesser dr (Wirkkreisdurchmesser Zahnriemen 17) und ds (Wirkkreisdurchmesser Zahnriemenscheibe 18) nicht aufeinanderliegen. Die in Figur 2 eingezeichnete Größe dw entspricht hierbei der halben Wirkkreisdurchmesserdifferenz. Der Wirkkreisdurchmesser des Zahnriemens 17 dr weist bei normalen bis hohen Zugkräften im Zahnriemen 17 einen entsprechend kleineren Radius auf als der Wirkkreisdurchmesser ds der Zahnriemenscheibe 18. Bei sehr kleinen Zugkräften im Zahnriemen 17 kann jedoch auch der Fall eintreten, dass dr > ds vorliegt.

Um das im Stand der Technik auftretende technische Problem zu erläutern, wird in Fig. 2 zunächst vereinfachend auf eine Zahnverschiebung für einen einzelnen Teilungsabschnitt eingegangen. Beim Erstkontakt eines Zahns 20 des Zahnriemens 17 mit einem Zahn 21 der Zahnriemenscheibe 18 liegen die einander zugewandten Zahnflanken 23 des Zahns 20 und des Zahns 21 aneinander ohne Kollision an. Da die Lücken 26 zwischen zwei Zähnen 21 der Zahnriemenscheibe 18 größer sind als ein dazwischentretender Zahn 20, ist ein gewisses Spiel vorhanden. Das Maß X in Fig. 2 betrifft den Abstand der Mittellinien des Zahns 20 und der Lücke 26 bei Erstkontakt der Zahnflanken 23. Der nachlaufende Zahn 20 jedoch erfährt eine Verschiebung P entgegen der Laufrichtung (Abstand X+P zwischen den Mittellinien). Diese Verschiebung P setzt sich aus zwei unterschiedlichen Anteilen zusammen. Zum einen der Zahnverschiebungsanteil aufgrund der Teilungsdifferenz, der aufgrund der Differenz zwischen der Teilung der Zahnriemenscheibe 18 und der tatsächlich vorliegenden Teilung des Zahnriemens 17 entsteht, und zum anderen der Zahnverschiebungsanteil aufgrund der oben erläuterten Wirkkreisdurchmesserdifferenz. Aufgrund dieser Zahnverschiebung entstehen in den sich im Eingriff mit der Zahnriemenscheibe 18 befindlichen Zähnen 20 erhöhte Zahnkräfte. In einzelnen Bereichen 27 kommt es zu Kollisionen zwischen den Zähnen 20 und 21.

Bei einer konstant anliegenden Umfangskraft erhöht sich die summierte Zahnverschiebung Psum mit jedem einzahnenden Zahn 20 in den Umschlingungsbogen der Zahnriemenscheibe 18, bis einer der beiden nachfolgenden Zustände erreicht ist:
1. Die aus den Zahnverschiebungen resultierenden Zahnkräfte übersteigen die Haftkräfte zwischen Zahnriemen 20 und Zahnriemenscheibe18. Das heißt, die summierte Zahnverschiebung erhöht sich mit jedem einzahnenden Zahn 20, solange keine relative Verschiebung (kein Schlupf) des Zahnriemens 17 zur Zahnriemenscheibe 18 auf dem Umschlingungsbogen der Zahnriemenscheibe 18 stattfindet. Sobald dieser Zustand überschritten wird, schlupft der Zahnriemen 17 auf der Zahnriemenscheibe 18.
2. Die summierte Zahnverschiebung hat die Größe erreicht, die der durchschnittlichen Zahnverschiebung je Verzahnungspaar multipliziert mit der Anzahl der Verzahnungspaare im Umschlingungsbogen entspricht, inklusive der Verschiebung, die zum Übertragen der Umfangskraft notwendig ist. Sobald dieser Zustand erreicht wird, erhöht sich die summierte Zahnverschiebung Psum nicht weiter.

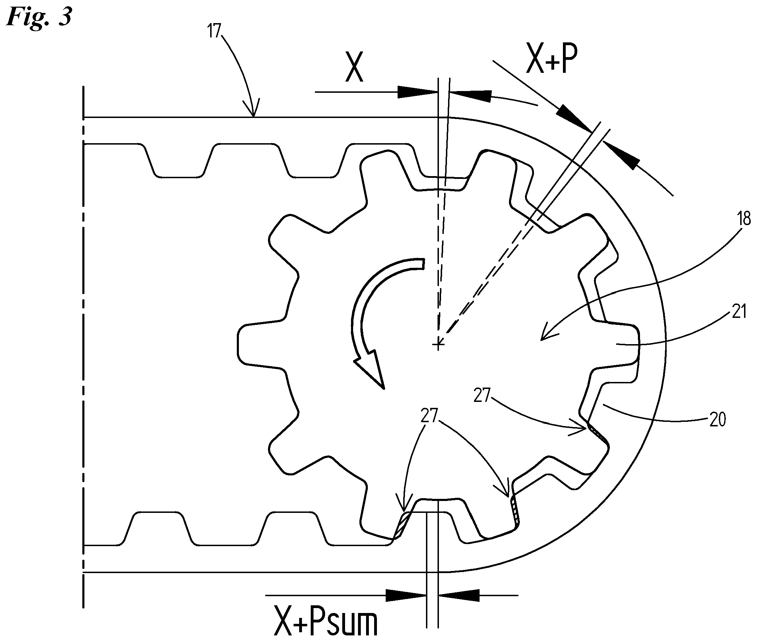

In Figur 3 ist zu erkennen, wie sich diese Verschiebung P über den gesamten Umschlingungsbogen, das heißt über den gesamten Kontaktbereich zwischen Zahnriemen 17 und Zahnriemenscheibe 18, auswirkt. Die Einzelverschiebung P summiert sich hierbei von Zahn 20 zu Zahn 20 weiter auf, sodass sich im Einzahnbereich die Gesamtverschiebung Psum ergibt.

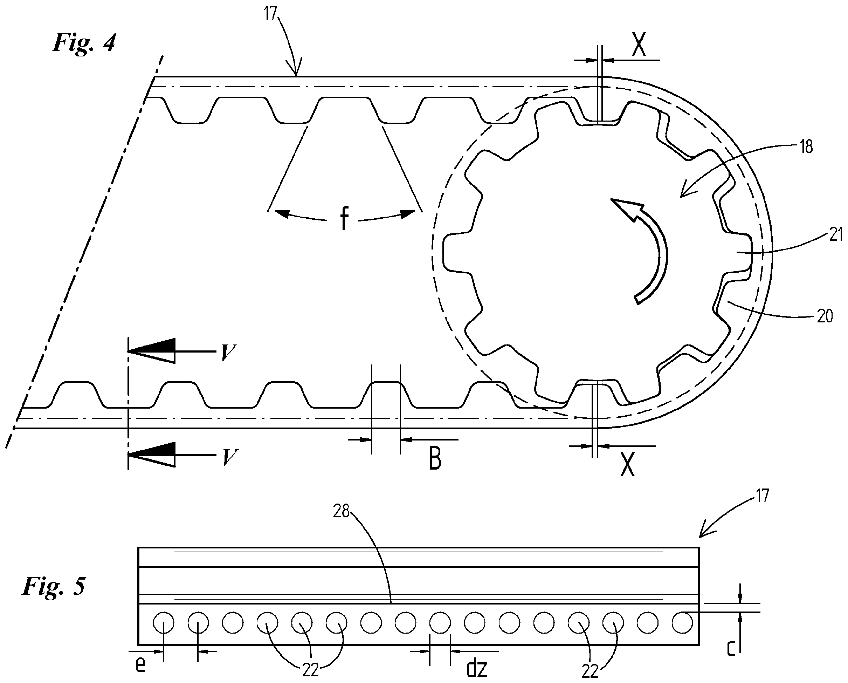

An dieser Stelle ist zu erwähnen, dass Figuren 3 und 4 dem Zwecke der Veranschaulichung und besseren Verständlichkeit sowie Einordnung der geometrischen Größen dienen soll. Für die praktische Anwendung wäre die Zahnriemenscheibe 18 in diesem Falle zu klein, da der Zahnriemen 17 durch die steifen Zugträger 22 nicht um einen derart kleinen Radius gebogen werden könnte.

Das in Fig. 4 und 5 gezeigte erfindungsgemäße Riemenprofil zeichnet sich dadurch aus, dass es Zahnverschiebungen minimiert und somit eine optimierte Belastungsverteilung der sich im Eingriff befindlichen Zähne 20, 21 vorliegt. Dies wird durch die Wahl und die Anpassung ausgewählter geometrischer Parameter erreicht, die in den Figuren 4 und 5 angezogen sind. Figur 5 stellt dabei einen Schnitt durch das neu entwickelte sog. FT-Profil aus Figur 4 dar. Figur 4 zeigt hierbei ein idealisiertes FT-Profil, welches in diesem Beispiel überhaupt keine Zahnverschiebungen P auftreten lassen würde. Im Realfall können die Zahnverschiebungen durch das erfindungsgemäße Profil jedoch auf ein Minimum reduziert werden.

Unter diese geometrischen Anpassungen fallen die Zahnflankenwinkel f, die Breite des Zahnriemenkopfes B, der Übergang von Zahnflanke 23 zum Zahnkopf 25 und zum Zahnfuß 24, der Abstand c zwischen Zugträger 22 und Zahnriemenfußlinie 28 sowie die Steifigkeit des Zahnriemens 17, die durch Erhöhung der Zugträgerdurchmesser dz und / oder Spulsteigung e bewirkt wird. Beispielsweise sind folgende Anpassungen denkbar:
- Der Zahnriemen 17 weist Zähne 20 mit einem derart modifizierten Trapez-Profil aufweist, dass der Kontakt der Zähne 20 des Zahnriemens 17 mit der Zahnriemenscheibe 18 auf einem Kopf 25 eines Zahns 21 der Zahnriemenscheibe 18 stattfindet.
- Der Abstand c von Zugträgern 22 des Zahnriemens 17 zur Zahnriemenfußlinie 28 des Zahnriemens 17 im nicht komprimierten (Ausgangs-)Zustand des Zahnriemens 17 beträgt 4 % einer Nennteilung des Zahnriemens 17 beträgt. +- 0,1 mm.
- Der Zahnriemen 17 weist nur Zugträger 22 auf, deren Durchmesser dz etwa 10 % der Nennteilung beträgt.
- Die Zugträger 28 weisen eine hohe (breiten- und teilungsabhängige) spezifische Steifigkeit auf, welche einen Wert von 3500 N/mm² übersteigen soll.
   Die Einheit kommt wie folgt zustande:
   Spezifische Steifigkeit = zulässige Zugkraft [N] / 0,4% Dehnung,
   Breitenabhängige spez. Steifigkeit = spez. Steifigkeit [N] / Breite [mm],
   Breiten- und teilungsabh. spez. Steifigkeit = spez. Steifigkeit [N] / Breite [mm] / Teilung [mm]).
- Die Spulsteigung (mit e deklariert in Figur 5) der Zugträger 22 ist kleiner als das 1,85-Fache der Zugträgerdurchmesser.
- Der Flankenwinkel f zwischen Flanken 23 benachbarter Zähne 20 des Zahnriemens 17 beträgt etwa 50°, insbesondere zwischen 45° und 55°, vorzugsweise 50°.
- Jeder Zahn 20 des Zahnriemens 17 weist im Übergang von den Flanken 23 des Zahns 20 zum Kopf 25 des Zahns 20 eine Abrundung aufweist, wobei ein Radius der Abrundung etwa 9 % Nennteilung des Zahnriemens 17 beträgt +-0,5 %.
- Der Zahnriemen 17 ist im Übergang von den Flanken 23 der Zähne 20 zur Zahnriemenfußlinie 28 abgerundet.
- Alternativ zu den Radien von Zahnriemenflanke 23 zu Zahnriemenzahnkopf 25 und Zahnriemenflanke 23 zu Zahnriemenzahnfuß 28 kann das Zahnprofil mit einer Höhenballigkeit versehen werden.
- Breite des Kopfes 25 (mit B deklariert in Figur 4, in % der Nennteilung) der Zähne 20 abhängig vom Profil wie folgt gewählt: 34+-3 bei Nennteilung 2,5; 31+-3 bei Nennteilung 5; 30+-3 bei Nennteilung 10; 27+-3 bei Nennteilung 20.

Die Anpassungen können in beliebiger Kombination miteinander verwirklicht werden. Es ist denkbar, nur eine, mehrere oder alle Anpassungen vorzunehmen.

Aufgrund der erfindungsgemäß hohen Steifigkeit des Zahnriemens 17 findet der Zahnriemen 17 durch die verminderte Biegsamkeit vorrangig Anwendung in Hochleistungstrieben mit größeren Zahnriemenscheibendurchmessern. Wie Figur 4 zu entnehmen ist, treten im Gegensatz zu den Figuren 2 und 3 durch den Einsatz des für die Anmeldung vorgesehenen Riemenprofils nur noch eine sehr geringe Wirkkreisdurchmesserdifferenz sowie eine sehr geringe Teilungsdifferenz auf, sodass sich die resultierenden Zahnverschiebungen auf ein Minimum begrenzen.

### Bezugszeichenliste:

- 10: Magazin
- 11: Produkt
- 12: Stößel
- 13: Tasche
- 14: Taschenkette
- 15: Mitnehmer
- 16: Produktbahn
- 17: Zahnriemen
- 18: Zahnriemenscheibe
- 19: Förderrichtung
- 20: Zahn (Zahnriemen)
- 21: Zahn (Zahnriemenscheibe)
- 22: Zugträger
- 23: Zahnflanke
- 24: Zahnfuß
- 25: Zahnkopf
- 26: Lücke
- 27: Kollisionsbereich
- 28: Zahnriemenfußlinie

## Patentansprüche

1. Zahnriementrieb mit mindestens einer Zahnriemenscheibe (18) und einem diese wenigstens teilweise umschlingenden Zahnriemen (17), mit wechselweise ineinander eingreifenden Zähnen (20, 21) und Zahnlücken (26), wobei die Zahnriemenscheibe (18) und der Zahnriemen (17) derart aufeinander abgestimmt sind, dass im Eingriff eine geringe und gleichmäßige Belastungsverteilung der Zähne (20) des Zahnriemens (17) gewährleistet ist, **dadurch gekennzeichnet, dass** jeder Zahn (20) des Zahnriemens (17) im Übergang von den Flanken (23) des Zahns (20) zum Kopf (25) des Zahns (20) eine Abrundung aufweist, wobei ein Radius der Abrundung 9 % der Nennteilung des Zahnriemens (17) beträgt +- 0,5 %.

2. Zahnriementrieb nach Anspruch 1, **dadurch gekennzeichnet, dass** der Zahnriemen (17) Zähne (20) mit einem derart modifizierten Trapez-Profil aufweist, dass der Kontakt der Zähne (20) des Zahnriemens (17) mit der Zahnriemenscheibe (18) auf einem Kopf (25) eines Zahns (21) der Zahnriemenscheibe (18) stattfindet.

3. Zahnriementrieb nach Anspruch 1 oder 2, **dadurch gekennzeichnet, dass** ein Abstand (c) von Zugträgern (22) des Zahnriemens (17) zu einer Zahnriemenfußlinie (28) des Zahnriemens (17) im nicht komprimierten (Ausgangs-)Zustand des Zahnriemens (17) etwa 4 % einer Nennteilung des Zahnriemens (17) beträgt.

4. Zahnriementrieb nach Anspruch 3, **dadurch gekennzeichnet, dass** der Abstand (c) 4 % der Nennteilung des Zahnriemens (17) +- 0,1 mm beträgt.

5. Zahnriementrieb nach Anspruch 1 oder einem der anderen vorhergehenden Ansprüche, **dadurch gekennzeichnet, dass** der Zahnriemen (17) nur Zugträger (22) aufweist, deren Durchmesser (dz) etwa 10 % der Nennteilung beträgt.

6. Zahnriementrieb nach Anspruch 5, **dadurch gekennzeichnet, dass** der Durchmesser (dz) 4 % der Nennteilung des Zahnriemens (17) +- 2 % beträgt.

7. Zahnriementrieb nach Anspruch 1 oder einem der anderen vorhergehenden Ansprüche, **dadurch gekennzeichnet, dass** eine Spulsteigung (e), also der Abstand benachbarter Zugträger (22) des Zahnriemens (17), geringer ist als das 1,85-Fache der Durchmesser der Zugträger (22).

8. Zahnriementrieb nach Anspruch 1 oder einem der anderen vorhergehenden Ansprüche, **dadurch gekennzeichnet, dass** ein Flankenwinkel (f) zwischen Flanken (23) benachbarter Zähne (20) des Zahnriemens (17) etwa 50° beträgt, insbesondere zwischen 45° und 55°, vorzugsweise 50°.

9. Zahnriementrieb nach Anspruch 1 oder einem der anderen vorhergehenden Ansprüche, **dadurch gekennzeichnet, dass** der Zahnriemen (17) im Übergang von den Flanken (23) der Zähne (20) zur Zahnriemenfußlinie (28) abgerundet ist.

10. Zahnriementrieb nach Anspruch 1 oder einem der anderen vorhergehenden Ansprüche 2 bis 8, **dadurch gekennzeichnet, dass** das Zahnprofil der Zähne (20) des Zahnriemens (17) eine Höhenballigkeit aufweist.

11. Zahnriementrieb nach Anspruch 1 oder einem der anderen vorhergehenden Ansprüche, **dadurch gekennzeichnet, dass** eine Breite (b) des Kopfes (25) der Zähne (20) des Zahnriemens (17) zwischen zwei konvergierenden Flanken (23) eine Länge von X % der Nennteilung des Zahnriemens (17) aufweist, wobei sich X in Abhängigkeit vom Profil des Zahnriemens (17) wie folgt ergibt:
- X = 34 +- 3 bei Nennteilung 2,5
- X = 31 +- 3 bei Nennteilung 5
- X = 30 +- 3 bei Nennteilung 10
- X = 27 +- 3 bei Nennteilung 20.

12. Zahnriemen (17) für einen Zahnriementrieb nach einem der vorhergehenden Ansprüche, **dadurch gekennzeichnet, dass** jeder Zahn (20) des Zahnriemens (17) im Übergang von den Flanken (23) des Zahns (20) zum Kopf (25) des Zahns (20) eine Abrundung aufweist, wobei ein Radius der Abrundung 9 % der Nennteilung des Zahnriemens (17) beträgt +- 0,5 %.

## Claims

1. Toothed belt drive having at least one toothed belt pulley (18) and a toothed belt (17) at least partially looping around said pulley, having teeth (20, 21) and tooth gaps (26) which alternately engage one another, wherein the toothed belt pulley (18) and the toothed belt (17) are matched to each other in such a way that a low and uniform load distribution of the teeth (20) of the toothed belt (17) is ensured in engagement, **characterized in that** each tooth (20) of the toothed belt (17) has a rounding in the transition from the flanks (23) of the tooth (20) to the head (25) of the tooth (20), wherein a radius of the rounding is 9% of the nominal pitch of the toothed belt (17) +- 0.5%.

2. Toothed belt drive according to Claim 1, **characterized in that** the toothed belt (17) has teeth (20) with a trapezoidal profile modified in such a way that the contact of the teeth (20) of the toothed belt (17) with the toothed belt pulley (18) takes place on a head (25) of a tooth (21) of the toothed belt pulley (18).

3. Toothed belt drive according to Claim 1 or 2, **characterized in that** a distance (c) of tension members (22) of the toothed belt (17) from a toothed belt root line (28) of the toothed belt (17) in the uncompressed (initial) state of the toothed belt (17) is approximately 4% of a nominal pitch of the toothed belt (17).

4. Toothed belt drive according to Claim 3, **characterized in that** the distance (c) is 4% of the nominal pitch of the toothed belt (17) +- 0.1 mm.

5. Toothed belt drive according to Claim 1 or one of the other preceding claims, **characterized in that** the toothed belt (17) has only tension members (22) of which the diameter (dz) is approximately 10% of the nominal pitch.

6. Toothed belt drive according to Claim 5, **characterized in that** the diameter (dz) is 4% of the nominal pitch of the toothed belt (17) +- 2%.

7. Toothed belt drive according to Claim 1 or one of the other preceding claims, **characterized in that** a winding pitch (e), that is to say the distance between adjacent tension members (22) of the toothed belt (17), is less than 1.85 times the diameter of the tension members (22).

8. Toothed belt drive according to Claim 1 or one of the other preceding claims, **characterized in that** a flank angle (f) between flanks (23) of adjacent teeth (20) of the toothed belt (17) is approximately 50°, in particular between 45° and 55°, preferably 50°.

9. Toothed belt drive according to Claim 1 or one of the other preceding claims, **characterized in that** the toothed belt (17) is rounded in the transition from the flanks (23) of the teeth (20) to the toothed belt root line (28).

10. Toothed belt drive according to Claim 1 or one of the other preceding Claims 2 to 8, **characterized in that** the tooth profile of the teeth (20) of the toothed belt (17) has a profile crowning.

11. Toothed belt drive according to Claim 1 or one of the other preceding claims, **characterized in that** a width (b) of the head (25) of the teeth (20) of the toothed belt (17) between two converging flanks (23) has a length of X% of the nominal pitch of the toothed belt (17), wherein X results as follows depending on the profile of the toothed belt (17):
- X = 34 +- 3 at nominal pitch 2.5
- X = 31 +- 3 at nominal pitch 5
- X = 30 +- 3 at nominal pitch 10
- X = 27 +- 3 at nominal pitch 20.

12. Toothed belt (17) for a toothed belt drive according to any one of the preceding claims, **characterized in that** each tooth (20) of the toothed belt (17) has a rounding in the transition from the flanks (23) of the tooth (20) to the head (25) of the tooth (20), wherein a radius of the rounding is 9% of the nominal pitch of the toothed belt (17) +- 0.5%.

## Revendications

1. Entraînement par courroie dentée comprenant au moins une poulie dentée (18) et une courroie dentée (17) l'enveloppant au moins partiellement, avec des dents (20, 21) et des espaces entre dents (26) s'engrenant alternativement les uns avec les autres, la poulie dentée (18) et la courroie dentée (17) étant adaptées l'une à l'autre de telle sorte qu'en prise une répartition faible et uniforme des charges sur les dents (20) de la courroie dentée (17) soit garantie, **caractérisé en ce que** chaque dent (20) de la courroie dentée (17) présente, au niveau de la transition entre les flancs (23) de la dent (20) et la tête (25) de la dent (20), un arrondi, un rayon de l'arrondi étant égal à 9 % du pas nominal de la courroie dentée (17), +- 0,5 %.

2. Entraînement par courroie dentée selon la revendication 1, **caractérisé en ce que** la courroie dentée (17) présente des dents (20) ayant un profil trapézoïdal modifié de telle sorte que le contact des dents (20) de la courroie dentée (17) avec la poulie dentée (18) s'effectue sur une tête (25) d'une dent (21) de la poulie dentée (18).

3. Entraînement par courroie dentée selon la revendication 1 ou 2, **caractérisé en ce qu'**une distance (c) entre des éléments de traction (22) de la courroie dentée (17) et une ligne de pied (28) de la courroie dentée (17), dans l'état non comprimé (initial) de la courroie dentée (17), est égale à environ 4 % d'un pas nominal de la courroie dentée (17).

4. Entraînement par courroie dentée selon la revendication 3, **caractérisé en ce que** la distance (c) est égale à 4 % du pas nominal de la courroie dentée (17), +- 0,1 mm.

5. Entraînement par courroie dentée selon la revendication 1 ou l'une quelconque des autres revendications précédentes, **caractérisé en ce que** la courroie dentée (17) présente uniquement des éléments de traction (22) dont le diamètre (dz) est égal à environ 10 % du pas nominal.

6. Entraînement par courroie dentée selon la revendication 5, **caractérisé en ce que** le diamètre (dz) est égal à 4 % du pas nominal de la courroie dentée (17), +- 2 %.

7. Entraînement par courroie dentée selon la revendication 1 ou l'une quelconque des autres revendications précédentes, **caractérisé en ce qu'**un pas d'enroulement (e), c'est-à-dire la distance entre des éléments de traction (22) adjacents de la courroie dentée (17), est inférieur à 1,85 fois le diamètre des éléments de traction (22).

8. Entraînement par courroie dentée selon la revendication 1 ou l'une quelconque des autres revendications précédentes, **caractérisé en ce qu'**un angle de flanc (f) entre les flancs (23) de dents (20) adjacentes de la courroie dentée (17) est égal à environ 50°, notamment compris entre 45° et 55°, de préférence égal à 50°.

9. Entraînement par courroie dentée selon la revendication 1 ou l'une quelconque des autres revendications précédentes, **caractérisé en ce que** la courroie dentée (17) est arrondie au niveau de la transition entre les flancs (23) des dents (20) et la ligne de pied (28) de la courroie dentée.

10. Entraînement par courroie dentée selon la revendication 1 ou l'une quelconque des revendications 2 à 8, **caractérisé en ce que** le profil des dents (20) de la courroie dentée (17) présente un bombé en hauteur.

11. Entraînement par courroie dentée selon la revendication 1 ou l'une quelconque des autres revendications précédentes, **caractérisé en ce qu'**une largeur (b) de la tête (25) des dents (20) de la courroie dentée (17), entre deux flancs (23) convergents, présente une longueur égale à X % du pas nominal de la courroie dentée (17), X étant déterminé en fonction du profil de la courroie dentée (17) comme suit :
- X = 34 +- 3 pour un pas nominal de 2,5
- X = 31 +- 3 pour un pas nominal de 5
- X = 30 +- 3 pour un pas nominal de 10
- X = 27 +- 3 pour un pas nominal 20.

12. Courroie dentée (17) destinée à un entraînement par courroie dentée selon l'une quelconque des revendications précédentes, **caractérisée en ce que** chaque dent (20) de la courroie dentée (17) présente, au niveau de la transition entre les flancs (23) de la dent (20) et la tête (25) de la dent (20), un arrondi, un rayon de l'arrondi étant égal à 9 % du pas nominal de la courroie dentée (17), +- 0,5 %.
